# EUROPÄISCHE PATENTANMELDUNG

(11) **EP 2 346 003 A2**
(43) Veröffentlichungstag der Anmeldung: **20.07.2011**
(21) Anmeldenummer: 11150917.0
(22) Anmeldetag: 14.01.2011
(51) Int. Cl.: G06T 15/04, G06T 17/05

(54) **Verfahren zur dreidimensionalen Darstellung einer Geländetopographie auf einer zweidimensionalen Anzeigeeinrichtung einer Navigationseinrichtung**

(30) Priorität: 19.01.2010 DE 102010005119
(71) Anmelder: Navigon AG, 20251 Hamburg (DE)
(72) Erfinder: Gaupp, Moritz, 97072 Würzburg (DE)
(74) Vertreter: von den Steinen, Axel

(57) **Zusammenfassung**

Die Erfindung betrifft Verfahren zur dreidimensionalen perspektivischen Darstellung einer Geländetopographie (01) auf einer zweidimensionalen Anzeigeeinrichtung (02) einer Navigationsvorrichtung, wobei die Anzeigeeinrichtung (02) aus Bildpunkten (09) aufgebaut ist, denen jeweils eine zweidimensionale Bildschirmkoordinate zugeordnet ist, umfassend folgende Verfahrensschritte:
- Laden eines gitterbasierten dreidimensionalen Geländemodells der Geländetopographie (01) aus einem Datenspeicher, und laden von Straßenverlaufsdaten, die den Straßenverlauf (07) von Straßen (03) in der Geländetopographie (01) beschreiben aus einem Datenspeicher;
- Umrechnung der Topographiedaten des dreidimensionalen Geländemodells in die zweidimensionalen Bildschirmkoordinaten des darzustellenden Bildausschnitts (08), wobei für jeden Bildpunkt (09) eine Texturkoordinate berechnet wird, die die geographische Lage des an diesem Bildpunkt jeweils darzustellenden Gebiets angibt;
- Berechnung des Abstandes (10) zwischen den Texturkoordinaten der einzelnen Bildpunkte (09) und dem Straßenverlauf (07) von Straßen (03) im darzustellenden Bildausschnitt (08);
- Darstellung des Geländemodells mit dem Straßenverlauf (07) von Straßen (03) im darzustellenden Bildausschnitt (08) auf der zweidimensionalen Anzeigeeinrichtung (02), wobei Bildpunkte (09a) der Anzeigeeinrichtung (02), deren Texturkoordinate innerhalb eines vorgegebenen Abstandbereiches zum Straßenverlauf (07) liegen, mit der zur Anzeige von Straßen (03) vorgesehenen Farbe angezeigt werden.

## Beschreibung

Die Erfindung betrifft ein Verfahren zur dreidimensionalen perspektivischen Darstellung einer Geländetopographie auf einer zweidimensionalen Anzeigeeinrichtung einer Navigationseinrichtung.

Aus dem Stand der Technik sind dreidimensionale perspektivische Darstellungen von Geländetopographien auf einer zweidimensionalen Anzeigeeinrichtung bekannt, die genutzt werden, um die Komplexität der darzustellenden Geometrie zu reduzieren und den Benutzer des Navigationssystems trotzdem eindeutig über die Geländetopographie zu informieren. Die bekannten Verfahren zur Umrechnung des darzustellenden Ausschnitts einer Geländetopographie auf der Anzeigeeinrichtung stellen hohe Anforderungen an die Hardwareleistung, insbesondere an die Leistung des Graphikprozessors.

Um eine dreidimensionale perspektivische Darstellung auf einem Bildschirm darzustellen, werden üblicherweise folgende Schritte ausgeführt:
a) Es werden Daten aus einem gitterbasierten dreidimensionalen Geländemodell, das die Geländetopographie in dem entsprechenden Gebiet modelliert, aus einem Datenspeicher geladen. Das Geländemodell ist dabei aus Darstellungszellen, beispielsweise Dreiecken aufgebaut, wobei jeder Darstellungszelle die entsprechenden Ortskoordinaten, beispielsweise XYZ-Koordinaten, zugeordnet sind. Außerdem enthält der Datenspeicher Straßenverlaufsdaten, die den Straßenverlauf von Straßen in der Geländetopographie beschreiben.
b) Die aus dem Datenspeicher geladenen Topographiedaten des dreidimensionalen Geländemodells werden vom Graphikprozessor für den darzustellenden Bildausschnitt auf die zweidimensionalen Bildschirmkoordinaten umgerechnet, um die Anzeige des Bildausschnitts auf den Bildpunkten der Anzeigeeinrichtung zu ermöglichen. Dabei muss für jeden Bildpunkt der Farbwert der anzuzeigenden Farbe bestimmt werden, wobei sich aus den Farben der einzelnen Bildpunkte dann das anzuzeigende Gesamtbild ergibt. Die Umwandlung der 3D-Koordinaten in Bildschirmkoordinaten berücksichtigt dabei die Betrachterentfernung des virtuellen Kamerastandorts, den Blickpunkt, die Brennweite u. s. w..
c) Anschließend werden alle im Bildausschnitt gewählten perspektivisch sichtbaren Darstellungszellen detektiert. Für die Bildpunkte zur Darstellung der einzelnen sichtbaren Darstellungszellen werden dann die jeweiligen Farben durch Interpolieren der Texturdaten der jeweiligen Darstellungszelle berechnet.

Dieses Vorgehen zur Berechnung der Farbe der Bildpunkte durch Interpolation der Texturdaten in den sichtbaren Darstellungszellen weist erhebliche Nachteile auf. Aufgrund der hohen Bildpixelauflösung der Texturdaten, die erheblich größer ist als die Bildschirmauflösung der Anzeigeeinrichtung, müssen bei jeder Verschiebe- oder Vergrößerungsaktion erhebliche Datenmengen aus dem Datenspeicher geladen und umgerechnet werden, wodurch die Hardware der Navigationsvorrichtung erheblich belastet wird. Besonders große Nachteile bietet die Berechnung der Bildpunktfarben durch Interpolation der Texturdaten im Hinblick auf die Straßendarstellung. Denn aufgrund der Interpolation der Texturdaten ergibt es sich, dass insbesondere im Vordergrund der Anzeigeeinrichtung anzuzeigende Straßenverläufe mit unscharfer Berandung dargestellt werden. Dies bedeutet mit anderen Worten, dass die Straßenverläufe aufgrund der Texturdateninterpolation nicht mit einer scharfen Berandung dargestellt werden. Vielmehr werden die Ränder der Straßen mit verschwommenen Farbverläufen dargestellt, so dass Straßen nicht, wie vom Benutzer erwartet, mit scharfer Begrenzung im Gelände verlaufend angezeigt werden, sondern stattdessen einen unscharfen Seheindruck vermitteln.

Ausgehend von diesem Stand der Technik ist es deshalb Aufgabe der vorliegenden Erfindung, ein neues Verfahren zur dreidimensionalen perspektivischen Darstellung einer Geländetopographie auf einer zweidimensionalen Anzeigeeinrichtung einer Navigationsvorrichtung vorzuschlagen, mit dem bei hoher Darstellungsgeschwindigkeit und relativ geringen Hardwareanforderungen eine flüssige und pixelscharfe Darstellung des Straßenverlaufs ermöglicht wird.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, dass bei der Darstellung von Straßenverläufen eine Interpolation der Farbübergänge zwischen der angezeigten Straße einerseits und dem umgebenden Gelände andererseits nicht sinnvoll ist und außerdem unnötig Hardwareressourcen verbraucht. Um die Straßenverläufe der im darzustellenden Bildausschnitt anzuzeigenden Straßen konturscharf anzuzeigen, wird deshalb gemäß dem erfindungsgemäßen Verfahren ein Abstandsbereich um den Straßenverlauf definiert, der immer in der zur Anzeige von Straßen vorgesehenen Farbe angezeigt wird. Dies bedeutet mit anderen Worten, dass für alle Bildpunkte, die ein Gebiet repräsentieren, das innerhalb dieses Abstandsbereichs zum Straßenverlauf liegt, keine Texturdateninterpolation mehr vorgenommen werden muss, so dass die Hardwareanforderungen bei der Berechnung des anzuzeigenden Bilds entsprechend sinken. Aufgrund der vordefinierten Breite des Abstandsbereichs zum Straßenverlauf, der unabhängig von den Texturdaten immer in der zur Anzeige von Straßen vorgesehenen Farbe angezeigt wird, wird außerdem eine konturscharfe Anzeige des Straßenverlaufs erreicht.

Bei der Durchführung des Verfahrens wird nach der Umrechnung der Topographiedaten des dreidimensionalen Geländemodells zunächst der Abstand von den einzelnen Bildpunkten der repräsentierten Gebiete zum Straßenverlauf der im Bildausschnitt anzuzeigenden Straßen bzw. Straßennetze berechnet. Für die Bildpunkte, deren zugeordneten Gebiete innerhalb des vordefinierten Abstandsbereichs zum Straßenverlauf liegen, wird dann ohne Weiteres die Farbe ausgewählt, die zur Anzeige von Straßen vorgesehen ist. Eine Texturdateninterpolation zur Berechnung der Farbe dieser Bildpunkte entfällt also. Für die übrigen Bildpunkte, deren zugeordneten Gebiete nicht innerhalb des vorgegebenen Abstandsbereichs zum Straßenverlauf liegen, werden die anzuzeigenden Farben in anderer Weise berechnet.

Das Geländemodell ist bevorzugt in Darstellungszellen aufgeteilt, wobei den Darstellungszellen jeweils eine Oberflächentextur zugeordnet ist. Die Oberflächentextur beschreibt die Oberflächenbeschaffenheit und somit die unterschiedliche Darstellung von Geländeformen, beispielsweise Wäldern, Wiesen, Gewässern u.s.w.. Die Bildpunkte, deren zugeordneten Gebiete nicht innerhalb des vorgegebenen Abstandsbereichs zur Anzeige von Straßenverläufen liegen, können bevorzugt mit der Farbe angezeigt werden, die durch Interpolation der Texturdaten in der zugeordneten Darstellungszelle berechnet wurden. Selbstverständlich können auch andere Berechnungsverfahren zur Berechnung der Darstellungsfarbe der Bildpunkte außerhalb des Abstandsbereichs Verwendung finden. Auch die Anwendung verschiedener Berechnungsverfahren für unterschiedliche Bildpunktbereiche ist denkbar.

Der Straßenverlauf von Straßen wird in den üblichen Kartendatenbanken der Kartenhersteller vielfach durch eine Straßenmittelachse ohne eigene Breitenausdehnung definiert. Werden solche Daten bei Anwendung des erfindungsgemäßen Verfahrens eingesetzt, bei denen der Straßenverlauf durch eine Straßenmittelachse ohne eigene Breitenausdehnung definiert ist, so ist es besonders vorteilhaft, wenn der Abstand zwischen den einzelnen den Bildpunkten der Anzeigeeinrichtung zugeordneten Texturkoordinaten und der Geometrie des Straßenverlaufs, die beispielsweise in Form von durch geographische Koordinaten bestimmte Vektoren beschrieben sein kann, durch die Berechnung der Länge der Lotnormalen auf der Straßenmittelachse bis zur Texturkoordinate des Bildpunkts bestimmt wird. Dies bedeutet mit anderen Worten, dass durch Berechnung der Lotnormalen auf der Straßenmittelachse durch die Texturkoordinate des jeweils zu betrachtenden Bildpunkts ohne Weiteres der jeweils kürzeste Abstand zwischen der entsprechenden Straße und der Texturkoordinate des betrachteten Bildpunkt ermittelt werden kann. Sind in dem darzustellenden Bildausschnitt mehrere Straßen bzw. ein Straßennetz vorhanden, so muss der Abstand der Texturkoordinate des betrachteten Bildpunkts zu allen Straßen, beziehungsweise zu allen Straßen innerhalb des maximal möglichen Abstandes, in dem Bildpunkte noch als Straßen angezeigt werden könnten, berechnet werden. Liegt der Abstand der Texturkoordinate des Bildpunkts zu einer der Straßen innerhalb des vorgegebenen Abstandsbereichs, so wird dieser Bildpunkt in der zur Anzeige von Straßen vorgesehenen Farbe angezeigt.

Besonders einfach kann der Abstand zwischen den Texturkoordinaten der einzelnen Bildpunkte und den Straßenverläufen berechnet werden, wenn die Straßenverläufe der Straßen durch Ketten von Geradenabschnitten, insbesondere durch Vektorketten, definiert sind. Die Koordinaten dieser Vektorketten können unmittelbar zur Berechnung des Abstands zu den Texturkoordinaten des Bildpunktes eingesetzt werden.

Bei der Anzeige von Straßen, insbesondere von Autobahnen, ist es oftmals erwünscht, dass neben der eigentlichen Straße auch ein beidseitiger Straßenrand angezeigt wird. Auch die Anzeige von solchen Straßenrändern kann durch die Anwendung des erfindungsgemäßen Verfahrens im Hinblick auf die notwendige Rechnerleistung vereinfacht und im Hinblick auf die Konturschärfe der Anzeige verbessert werden. Dazu wird neben dem ersten Abstandsbereich, innerhalb dem die Bildpunkte in der zur Anzeige von Straßen vorgesehenen Farbe angezeigt werden, ein zweiter Abstandsbereich definiert, der sich jeweils auf beiden Seiten des den Kern der Straßenanzeige bildenden ersten Abstandsbereiches erstreckt. Für alle Bildpunkte, deren zugeordnete Texturkoordinaten sich innerhalb dieses zweiten Abstandsbereiches beidseitig des ersten Abstandsbereichs befinden, wird eine Farbe ausgewählt, die zur Anzeige von Straßenrändern vorgesehen ist. Auf diese Weise können ohne größeren Zusatzaufwand sowohl der Kernbereich der Straße in einer ersten Farbe, als auch die sich jeweils seitlich erstreckenden Straßenränder in einer zweiten Farbe angezeigt werden.

Gemäß einer bevorzugten Verfahrensvariante wird auch die Betrachterentfernung zwischen der perspektivischen Kameraposition und den Texturkoordinaten der Bildpunkte der Anzeigeeinrichtung berücksichtigt. Bei dieser Betrachterentfernung handelt es sich letztendlich um die Berücksichtigung des eingestellten Zoomfaktors. Gemäß einer ersten Ausführungsform wird die Betrachterentfernung dazu verwendet, die Breite des vorgegebenen Abstandsbereichs abhängig von der Betrachterentfernung zu variieren. Bei einer großen Betrachterentfernung wird die Breite des Abstandsbereichs, innerhalb dem die Bildpunkte in der zur Anzeige von Straßen vorgesehenen Farbe angezeigt werden, vergrößert, so dass sich im Ergebnis die Breite der angezeigten Straße entsprechend überproportional vergrößert Damit wird erreicht, dass auch Straßen in weiter Darstellungsentfernung, die an sich nicht mehr als Straßen dargestellt werden würden, zumindest schematisch angezeigt werden. Bei Verringerung der Betrachterentfernung wird die Breite des Abstandsbereiches zur Anzeige von Straßen verkleinert, so dass auch die Breite der Straßen in der Anzeige in der Normalproportion angezeigt wird.

In einer zweiten Variante ist vorgesehen, dass die Betrachterentfernung dazu verwendet wird, den Farbwert der Bildpunkte, deren Texturkoordinaten innerhalb des Abstandsbereichs liegen, zu verändern. Dadurch wird es ermöglicht, dass beispielsweise Bildpunkte mit einer großen Betrachterentfernung in blassen Farben und Bildpunkte mit einer kleinen Betrachterentfernung mit kontrastreichen Bildfarben angezeigt werden.

Gemäß einer dritten Ausführungsform wird die Betrachterentfernung dazu verwendet, für Bildpunkte, deren Texturkoordinaten zwar innerhalb des Abstandsbereichs zu einem Straßenverlauf liegen, die aber ein Höchstmaß der Betrachterentfernung überschreiten, die Anzeige von Straßen zu unterdrücken. Im Ergebnis wird dadurch erreicht, dass bei Überschreiten des Höchstmaßes der Betrachterentfernung die Anzeige von Straßen ausgeblendet wird, ohne dass es dazu eines zusätzlichen Berechnungsschritts bedarf.

Alternativ oder additiv zur Berücksichtigung der Betrachterentfernung (Zoomfaktor) kann auch die Straßenkategorie einer anzuzeigenden Straße bei der Anwendung des erfindungsgemäßen Verfahrens Berücksichtigung finden. Gemäß einer ersten Ausführungsform wird die Straßenkategorie einer an einem Bildpunkt darzustellenden Straße dazu verwendet, die Breite des vorgegebenen Abstandsbereichs zu variieren. So können beispielsweise Autobahnen mit einer großen Breite des vorgegebenen Abstandsbereiches berechnet werden, so dass die Autobahn mit einer entsprechend großen Breite am Bildschirm angezeigt wird. Für Straßen einer geringeren Straßenkategorie, beispielsweise Ortdurchgangsstraßen, wird eine entsprechend geringere Breite des vorgegebenen Abstandsbereichs eingestellt, so dass diese Straßen entsprechend ihrer Bedeutung nur relativ schmal angezeigt werden.

Gemäß einer zweiten Ausführungsform ist die Verwendung der Straßenkategorie auch dazu vorgesehen, den Farbwert, der an dem Bildpunkt zur Anzeige der Straße verwendet wird, zu variieren. Auf diese Weise können abhängig von der jeweiligen Straßenkategorie unterschiedliche Farben zur Anzeige der Straße an den Bildpunkten Verwendung finden, so dass beispielsweise Autobahnen mit einer ersten Farbe, beispielsweise gelb, und Landstraßen mit einer davon unterschiedlichen Farbe, beispielsweise rot, angezeigt werden.

Gemäß einer dritten Ausführungsform ist es vorgesehen, dass bei der Anzeige von Straßenverläufen bestimmte Straßenkategorien nicht angezeigt werden. Dies bedeutet für die Anwendung des erfindungsgemäßen Verfahrens, dass für Bildpunkte, an denen eine bestimmte Straßenkategorie der darzustellenden Straße festgestellt wurde, die Anzeige von Straßen unterdrückt wird. In Kombination mit der Betrachterentfernung kann die Straßenkategorie auch dazu verwendet werden, nur in bestimmter Entfernung für bestimmte Straßenkategorien die Anzeige von Straßen zu unterdrücken. Damit ist es beispielsweise möglich, Straßen mit geringer Straßenkategorie, insbesondere Wohnstraßen, im Vordergrund anzuzeigen und in weiter entfernt liegenden Kartenbereichen deren Anzeige zu unterdrücken.

Auch im Hinblick auf die Anzeige von Routenverläufen bei aktuellen Routenführungsprozessen kann das erfindungsgemäße Verfahren zum Einsatz kommen. Wird bei der Berechnung der Farbwerte für die Bildpunkte festgestellt, dass eine an einem Bildpunkt anzuzeigende Straße Teil des aktuellen Routenverlaufs ist, so kann dieser Bildpunkt mit der für die Anzeige von Routen vorgesehenen Farbe angezeigt werden.

Verschiedene Aspekte des erfindungsgemäßen Verfahrens werden in den Zeichnungen schematisch dargestellt und werden nachfolgend beispielhaft erläutert.

Es zeigen:
- Fig. 1: die perspektivische Darstellung einer Geländetopographie auf einer zweidimensionalen Anzeigeeinrichtung einer Navigationsvorrichtung nach dem Stand der Technik;
- Fig. 2: einen schematisch dargestellten Ausschnitt eines dreidimensionalen Geländemodells mit dem Straßenverlauf einer Straße;
- Fig. 3: die schematische Darstellung der Umrechnung des dreidimensionalen Geländemodells gemäß Fig. 2 in zweidimensionale Bildschirmkoordinaten;
- Fig. 4: einen Bildausschnitt aus Fig. 3 mit Darstellung der einzelnen Bildpunkte;
- Fig. 5: die Darstellung des Abstands eines Bildpunkts aus Fig. 4 zu dem Straßenverlauf der anzuzeigenden Straße;
- Fig. 6: den Ausschnitt gemäß Fig. 4 nach Einfärbung der Bildpunkte abhängig von ihrem Abstand zum Straßenverlauf;
- Fig. 7: die Anzeige einer dreidimensionalen perspektivischen Darstellung einer Geländetopographie mit Straßenverlauf bei Anwendung des erfindungsgemäßen Verfahrens.

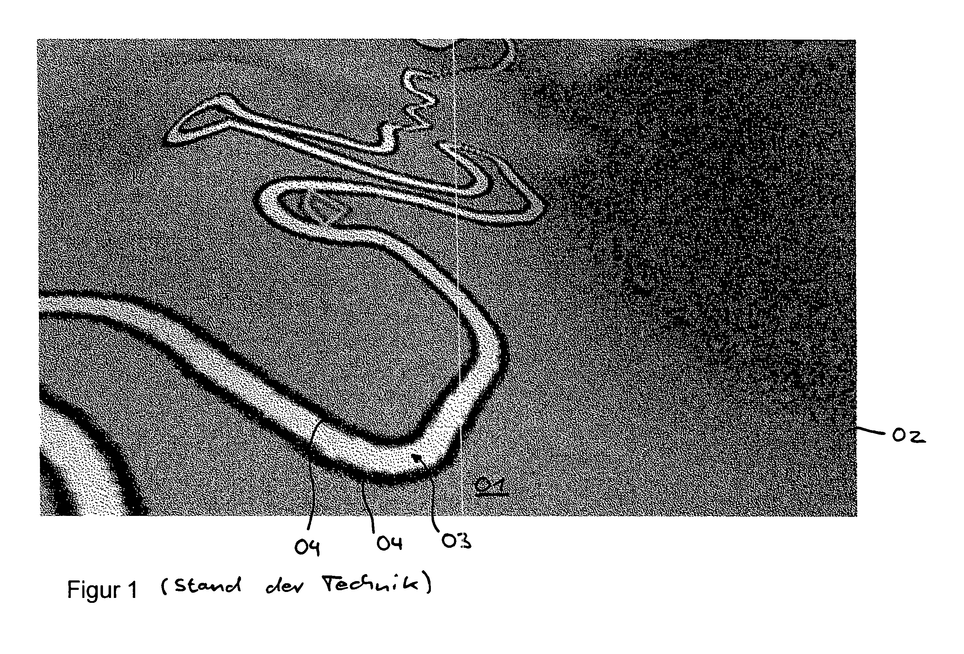

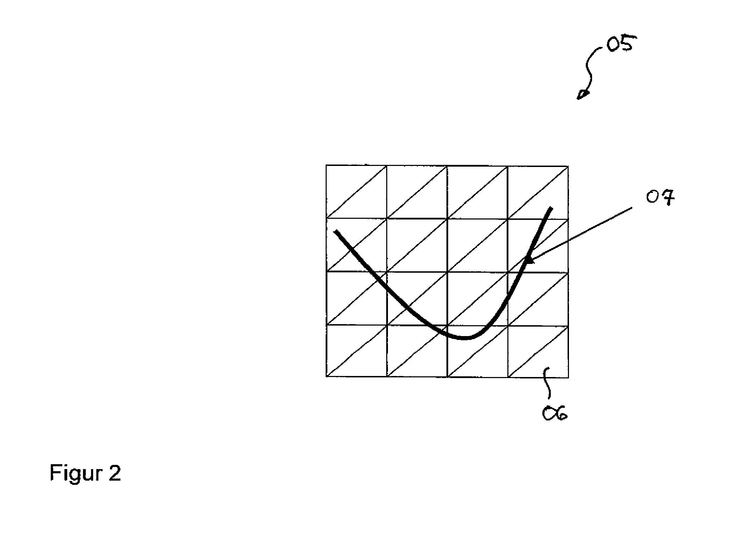

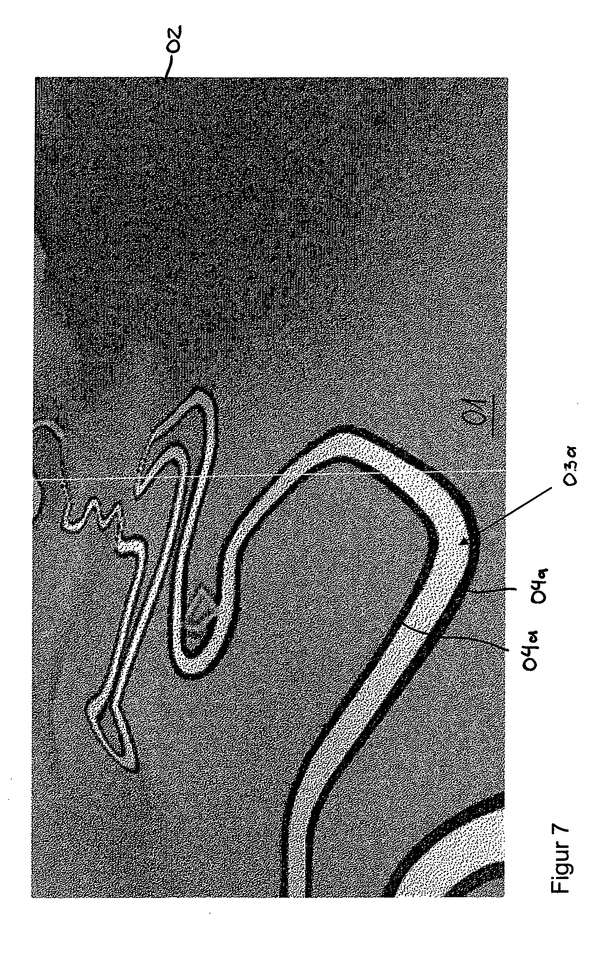

Fig. 1 zeigt eine dreidimensionale perspektivische Darstellung einer Geländetopographie 01 auf einer zweidimensionalen Anzeigeeinrichtung 02 einer Navigationsvorrichtung nach vorbekannten Stand der Technik. Die an der Anzeigeeinrichtung 02 anzuzeigende Straße 03 wird zweifarbig mit Straßenrändern 04 in der Geländetopographie 01 verlaufend angezeigt. Man erkennt, dass die Straße 03 und insbesondere die Straßenränder 04 im Vordergrund des angezeigten Bildausschnitts einen unscharfen, verwaschenen Seheindruck vermitteln. Dieser unscharfe, verwaschene Seheindruck beruht dabei auf dem Effekt, dass bei der Berechnung des anzuzeigenden Bilds die Farben für die einzelnen Bildpunkte der Anzeigeeinrichtung 02 durch Texturdateninterpolation berechnet werden. Diese Texturdateninterpolation führt dabei dazu, dass keine konturscharfen Grenzen zwischen den Straßen 03 bzw. Straßenrändern 04 zur umgebenden Geländetopographie 01 angezeigt werden, sondern Farbübergänge. Dieser Effekt wird dabei insbesondere im Bildvordergrund als unangenehm empfunden, da aufgrund der größeren Breite der Straße 03 bzw. der Straßenränder 04 im Bildvordergrund die Farbübergänge einen verwaschenen bzw. unscharfen Seheindruck vermitteln. Zur Vermeidung dieses unerwünschten Darstellungseffektes wird das erfindungsgemäße Verfahren vorgeschlagen, das nachfolgend anhand der Figuren 2 bis 6 erläutert werden soll. Fig. 7 zeigt dann die Geländetopographie 01 mit der Straße 03 und den Straßenrändern 04 bei Anzeige an einer Anzeigeeinrichtung 02 unter Verwendung des erfindungsgemäßen Verfahrens.

Fig. 2 zeigt beispielsweise in schematischer Darstellung den Ausschnitt aus einem gitterbasierten dreidimensionalen Geländemodell 05. Jeder der dreiecksförmigen Darstellungszellen 06 ist eine Oberflächentextur zugeordnet. Die Aufteilung des Geländemodells 05 in die dreiecksförmigen Darstellungszellen 06 ist üblicherweise sehr fein, so dass die Darstellung in den Zeichnungen zur besseren Erkennbarkeit stark vergröbert ist. Außerdem enthält das Geländemodell auch noch Straßenverlaufsdaten zur Beschreibung des Verlaufs einer Straße 07. Im dargestellten Beispiel wäre die Geländetopographie im Geländemodell 05 eben, so dass alle Darstellungszellen 06 in einer Ebene liegen. Zur Modellierung von unebenen Geländemodellen können die einzelnen Darstellungszellen 06 gegeneinander gekippt werden.

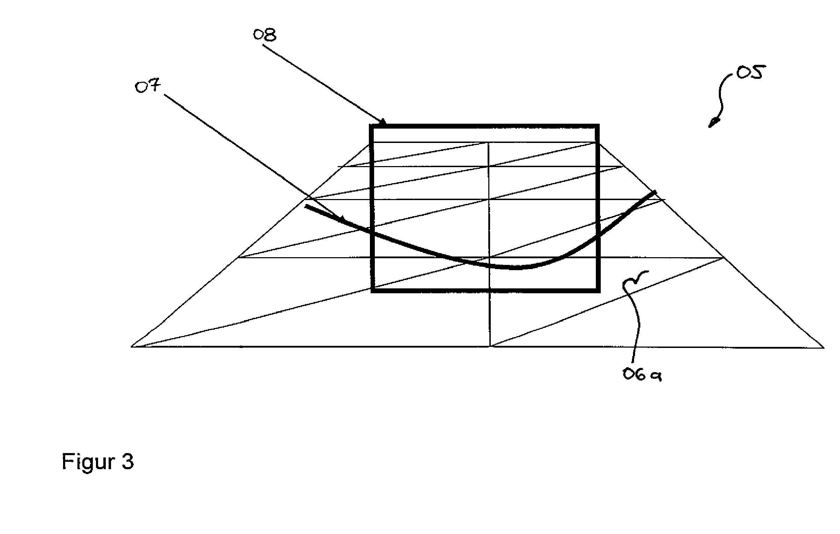

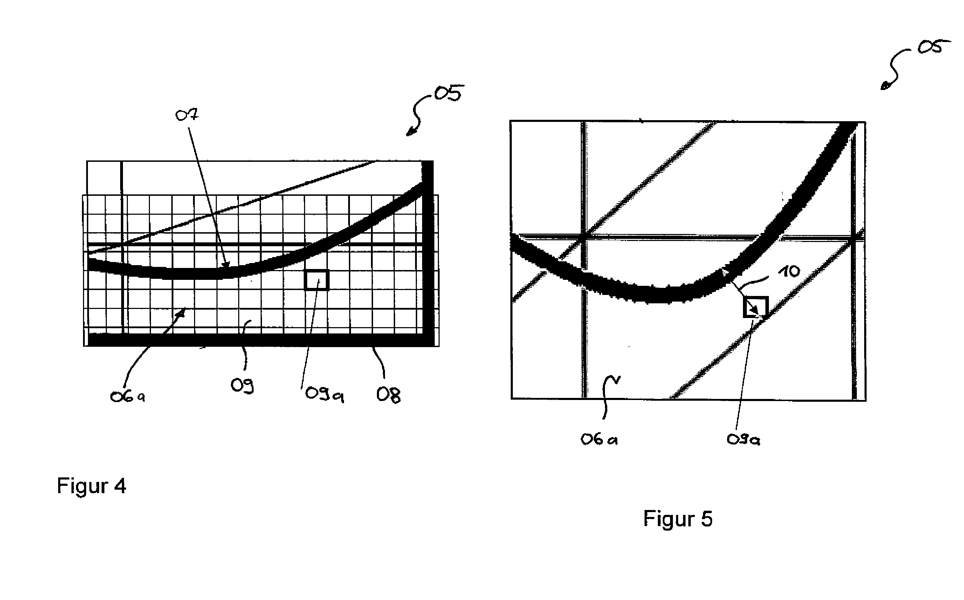

Fig. 3 zeigt schematisch die Umrechnung des Geländemodells 05 zur Darstellung einer perspektivischen Projektion der Geländetopographie an einer zweidimensionalen Anzeigeeinrichtung. Im dargestellten Beispiel soll der Bildausschnitt 08 des Geländemodells 05 mit dem Straßenverlauf 07 in der dargestellten perspektivischen Projektion an einer zweidimensionalen Anzeigeeinrichtung 02 mit Bildpunkten 09 (siehe Fig. 4) angezeigt werden. Der Straßenverlauf 07 wird dabei lediglich durch die Straßenmittelachse ohne eigene Breitenausdehnung definiert.

Fig. 4 zeigt einen Ausschnitt der perspektivischen Projektion gemäß Fig. 3 im Bereich eines Bildpunktes 09a . Dabei sind in Fig. 4 die Bildpunkte 09 der verwendeten Anzeigeeinrichtung 02 schematisiert als rechteckige Pixel dargestellt. Jedem der Bildpunkte 09 ist eine Vielzahl von Darstellungszellen 06 zugeordnet. Durch die Anzeige eines Bildpunktes 09 werden alle diesem Bildpunkt 09 zugeordneten Darstellungszellen 06 repräsentativ dargestellt. Im Weiteren soll das erfindungsgemäße Verfahren beispielhaft für die Berechnung der Farbe des Bildpunktes 09a dargestellt werden.

Fig. 5 zeigt die Lage des vom Bildpunkt 09a dargestellten Gebiets im 2D-Raum relativ zum Straßenverlauf 07. Bei Durchführung des erfindungsgemäßen Verfahrens wird der kürzeste Abstand 10 der Texturkoordinate des Bildpunktes 09a zum Straßenverlauf 07 berechnet. Für diese Berechnung wird auf den Straßenverlauf 07 eine Lotnormale gefällt und die Länge der Lotnormalen zwischen dem Straßenverlauf 07 und der Texturkoordinate des Bildpunktes 09a berechnet.

Liegt der Abstand 10 zwischen der Texturkoordinate des Bildpunkts 09a und dem Straßenverlauf 07 innerhalb eines vorgegebenen Abstandsbereichs, d.h. unterschreitet der Abstand 10 ein vorgegebenes Maß, so wird der Bildpunkt 09a gemäß dem erfindungsgemäßen Verfahren als zur Straße gehörig definiert und in einer entsprechenden Farbe eingefärbt.

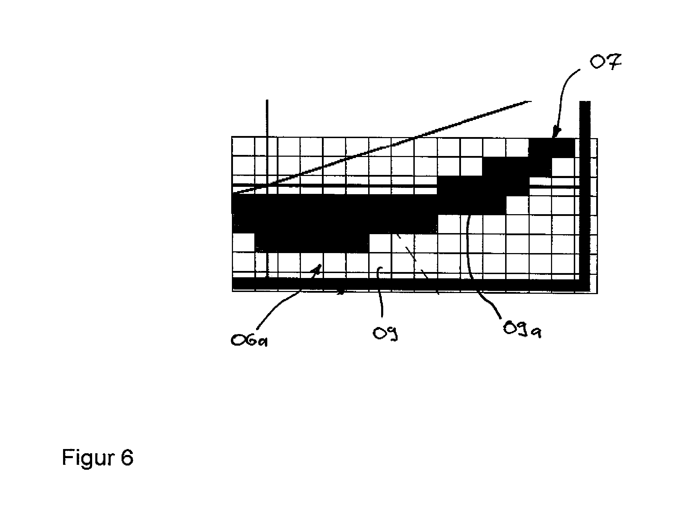

Fig. 6 zeigt den Ausschnitt der perspektivischen Projektion gemäß Fig. 4 nach Durchführung des erfindungsgemäßen Verfahrens für alle Bildpunkte 09. Alle Bildpunkte 09, die innerhalb des vorgegebenen Abstandsbereichs um den Straßenverlauf 07 liegen, werden entsprechend dem Bildpunkt 09a eingefärbt und entsprechend angezeigt. Für diese entsprechend dem Bildpunkt 09a eingefärbten Bildpunkte 09 wird keine Texturdateninterpolation durchgeführt, da diese Bildpunkte eindeutig als zur Straße gehörig identifiziert wurden und die Straße konturscharf angezeigt werden soll.

Fig. 7 zeigt die Anzeige der Straße 03a und der Straßenränder 04a an der Anzeigeeinrichtung 02 unter Verwendung des erfindungsgemäßen Verfahrens. Man erkennt, dass die Straße 03a und die Straßenränder 04a durch Verwendung des erfindungsgemäßen Verfahrens auch im Vordergrund des angezeigten Bildausschnitts konturscharf angezeigt werden und ein verwaschener bzw. verschwommener Bildeindruck vermieden ist.

## Patentansprüche

1. Verfahren zur dreidimensionalen perspektivischen Darstellung einer Geländetopographie (01) auf einer zweidimensionalen Anzeigeeinrichtung (02) einer Navigationsvorrichtung, wobei die Anzeigeeinrichtung (02) aus Bildpunkten (09) aufgebaut ist, denen jeweils eine zweidimensionale Bildschirmkoordinate zugeordnet ist,
umfassend folgende Verfahrensschritte:
- Laden eines gitterbasierten dreidimensionalen Geländemodells der Geländetopographie (01) aus einem Datenspeicher, und laden von Straßenverlaufsdaten, die den Straßenverlauf (07) von Straßen (03) in der Geländetopographie (01) beschreiben aus einem Datenspeicher;
- Umrechnung der Topographiedaten des dreidimensionalen Geländemodells in die zweidimensionalen Bildschirmkoordinaten des darzustellenden Bildausschnitts (08), wobei für jeden Bildpunkt (09) eine Texturkoordinate berechnet wird, die die geographische Lage des an diesem Bildpunkt jeweils darzustellenden Gebiets angibt;
- Berechnung des Abstandes (10) zwischen den Texturkoordinaten der einzelnen Bildpunkte (09) und dem Straßenverlauf (07) von Straßen (03) im darzustellenden Bildausschnitt (08);
- Darstellung des Geländemodells mit dem Straßenverlauf (07) von Straßen (03) im darzustellenden Bildausschnitt (08) auf der zweidimensionalen Anzeigeeinrichtung (02), wobei Bildpunkte (09a) der Anzeigeeinrichtung (02), deren Texturkoordinate innerhalb eines vorgegebenen Abstandbereiches zum Straßenverlauf (07) liegen, mit der zur Anzeige von Straßen (03) vorgesehenen Farbe angezeigt werden.

2. Verfahren nach Anspruch 1,
**dadurch gekennzeichnet,**
**dass** das Geländemodell in Darstellungszellen (06) aufgeteilt ist, wobei den Darstellungszellen (06) jeweils eine Oberflächentextur zugeordnet ist, und wobei Bildpunkte (09), die nicht als Straßen oder Straßenränder angezeigt werden, mit der Farbe angezeigt werden, die durch Interpolation der Oberflächentextur in der zugeordneten Darstellungszelle berechnet wird.

3. Verfahren nach Anspruch 1 oder 2,
**dadurch gekennzeichnet,**
**dass** der Straßenverlauf (07) von Straßen (03) durch eine Straßenmittelachse ohne eigene Breitenausdehnung definiert ist, wobei bei der Berechnung des Abstandes (10) zwischen den Texturkoordinaten der einzelnen Bildpunkte (09) der Anzeigeeinrichtung (02) und dem Straßenverlauf (07) die Länge der Lotnormalen auf der Straßenmittelachse bis zum Bildpunkt (09) bestimmt wird.

4. Verfahren nach Anspruch 3,
**dadurch gekennzeichnet,**
**dass** der Straßenverlauf (07) von Straßen durch eine Kette von Geradenabschnitten, insbesondere durch eine Vektorenkette, definiert ist.

5. Verfahren nach einem der Ansprüche 1 bis 4,
**dadurch gekennzeichnet,**
**dass** ein erster Abstandsbereich und zumindest ein zweiter Abstandsbereich vorgegeben ist, wobei bei der Darstellung des Geländemodells mit dem Straßenverlauf (07) von Straßen (03) im darzustellenden Bildausschnitt (08) auf der zweidimensionalen Anzeigeeinrichtung (02) alle Bildpunkte (09) der Anzeigeeinrichtung (02), die innerhalb des ersten Abstandsbereichs zum Straßenverlauf (07) liegen, mit der zur Anzeige von Straßen vorgesehenen Farbe angezeigt werden und alle Bildpunkte (09) der Anzeigeeinrichtung (02), die innerhalb des zweiten Abstandsbereichs zum Straßenverlauf (07) liegen, mit der zur Anzeige von Straßenrändern (04) vorgesehenen Farbe angezeigt werden.

6. Verfahren nach einem der Ansprüche 1 bis 5,
**dadurch gekennzeichnet,**
**dass** die Betrachterentfernung zwischen der perspektivischen Kameraposition und den Texturkoordinaten der Bildpunkte (09) berechnet wird, wobei für jeden Bildpunkt (09) die Breite des vorgegebenen Abstandsbereichs, innerhalb dessen die Bildpunkte (09) mit der zur Anzeige von Straßen (03) und/oder Straßenrändern (04) vorgesehenen Farbe angezeigt werden, abhängig von der Betrachterentfernung dieses Bildpunktes (09) verändert wird.

7. Verfahren nach einem der Ansprüche 1 bis 5,
**dadurch gekennzeichnet,**
**dass** die Betrachterentfernung zwischen der perspektivischen Kameraposition und den Bildpunkten (09) der Anzeigeeinrichtung (02) berechnet wird, wobei für jeden Bildpunkt (09) der Farbwert, mit dem der Bildpunkt (09) bei der Anzeige von Straßen (03) und/oder Straßenrändern (04) angezeigt wird, abhängig von der Betrachterentfernung dieses Bildpunktes (09) verändert wird.

8. Verfahren nach einem der Ansprüche 1 bis 5,
**dadurch gekennzeichnet,**
**dass** die Betrachterentfernung zwischen der perspektivischen Kameraposition und den Bildpunkten (09) der Anzeigeeinrichtung (02) berechnet wird, wobei an den Bildpunkten (09), deren Betrachterentfernung ein vorgegebenes Höchstmaß überschreitet, die Anzeige von Straßen (03) unterdrückt wird.

9. Verfahren nach einem der Ansprüche 1 bis 8,
**dadurch gekennzeichnet,**
**dass** die Straßenkategorie einer an einem Bildpunkt (09) darzustellenden Straße (03) festgestellt wird, wobei für jeden Bildpunkt (09) die Breite des vorgegebenen Abstandsbereichs, innerhalb dem die Bildpunkte (09) mit der zur Anzeige von Straßen (03) vorgesehenen Farbe angezeigt werden, abhängig von der festgestellten Straßenkategorie dieses Bildpunktes (09) verändert wird.

10. Verfahren nach einem der Ansprüche 1 bis 8,
**dadurch gekennzeichnet,**
**dass** die Straßenkategorie einer an einem Bildpunkt (09) darzustellenden Straße (03) festgestellt wird, wobei für jeden Bildpunkt (09) der Farbwert, mit dem der Bildpunkt (09) bei der Anzeige von Straßen (03) angezeigt wird, abhängig von der Straßenkategorie der an diesem Bildpunkt (09) darzustellenden Straße (03) verändert wird.

11. Verfahren nach einem der Ansprüche 1 bis 8,
**dadurch gekennzeichnet,**
**dass** die Straßenkategorie einer an einem Bildpunkt (09) darzustellenden Straße (03) festgestellt wird, wobei an den Bildpunkten (09), an denen eine Straße einer bestimmten Straßenkategorie darzustellen ist, die Anzeige von Straßen (03) unterdrückt wird.

12. Verfahren nach einem der Ansprüche 1 bis 11,
**dadurch gekennzeichnet,**
**dass** für eine an einem Bildpunkt (09) darzustellenden Straße (03) festgestellt wird, ob die Straße (03) Bestandteil der Route einer aktuellen Routenführung ist, wobei die Bildpunkte (09), die Bestandteil der aktuellen Route sind, mit der für Routen vorgesehenen Farbe angezeigt werden.
